# EUROPÄISCHE PATENTSCHRIFT

(11) **EP 0 779 051 B1**
(45) Veröffentlichungstag und Bekanntmachung des Hinweises auf die Patenterteilung: **30.06.1999**
(21) Anmeldenummer: 96118907.3
(22) Anmeldetag: 26.11.1996
(51) Int. Cl.: A47J 27/00

(54) **Topf für eine sensorgesteuerte Garungseinheit**
Pot for a sensor controlled cooking unit
Récipient pour une unité de cuisson contrôlé par un capteur

(30) Priorität: 12.12.1995 DE 19546386
(43) Veröffentlichungstag der Anmeldung: 18.06.1997
(73) Patentinhaber: BSH Bosch und Siemens Hausgeräte GmbH, 81669 München (DE)
(72) Erfinder: Has, Uwe, Dipl.-Ing., 84579 Unterneukirchen (DE); Friedrich, Jürgen, Dipl.-Ing., 91726 Gerolfingen (DE); Siebert, Thomas, Dipl.-Ing., 84137 Vilsbiburg (DE)

(56) Entgegenhaltungen:
- EP-A- 0 142 153
- EP-A- 0 503 414
- AU-A- 4 003 372
- DE-C- 3 538 353

## Beschreibung

Die Erfindung bezieht sich auf einen Topf für eine sensorgesteuerte Garungseinheit, die aus Gargerät, Sensorik und Kochfeld besteht, wobei ein der sensorgesteuerten Garungseinheit zugeordneter Infrarotsensor kochstellenbezogen leicht erhöht oberhalb des Kochfeldes angeordnet und in einer konstruktiven Funktionseinheit integriert ist, so daß in der sensorgesteuerten Garungseinheit Kochfeld, Gargerät und Sensorik systemhaft miteinander verbunden, aufeinander angepaßt und optimierbar sind, und auf ein Verfahren zur Systemertüchtigung eines derartigen Topfes.

Eine derartige Anordnung zum Messen der Temperatur in einem Kochtopf ist durch die Patentschrift DE 33 41 234 C1 bekannt geworden. Diese Erfindung betrifft eine Anordnung zum Messen der Temperatur eines auf einer Heizplatte erwärmten Kochtopfes mit Kochgut, wobei mit Hilfe eines Strahlungsfühlers die Temperatur des Kochgutes ermittelbar ist. Aussagen, die zum Topf bei Anwendung eines Strahlungsfühlers notwendig werden, sind dieser Anmeldung nicht zu entnehmen.

Die Aufgabe der vorliegenden Erfindung besteht darin, für eine sensorgesteuerte Garungseinheit einen beliebigen Topf so zu ertüchtigen, daß er als Systemtopf tauglich ist.

Die erfindungsgemäße Anordnung zur Lösung dieser Aufgabe ist dadurch gekennzeichnet, daß eine Systemertüchtigung zum Infrarotsensorgaren für Normaltöpfe durch eine Beschichtung mit Folie, Lack oder anderen Mitteln herbeiführbar ist, wobei diese Beschichtung eine restlos lösbare ist. Eine vorteilhatte Ausgestaltung der Erfindung besteht darin, daß die Beschichtung des Topfes durch ein an der Topfwand lösbar befestigtes Band erfolgt.

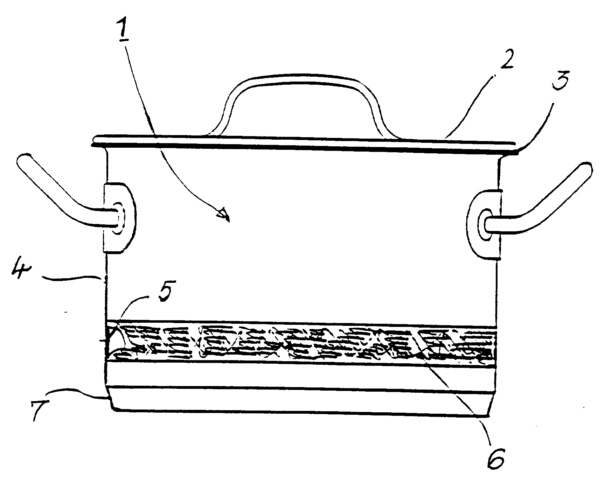

Weitere vorteilhafte Ausgestaltungen der Erfindung sind in den Unteransprüchen enthalten. Ein Ausführungsbeispiel der Erfindung ist im folgenden anhand der Zeichnung näher beschrieben.

Die einzige Figur zeigt einen Topf, der mit Hilfe eines Bandes bzw. einer Beschichtung systemertüchtigt ist. Gemäß dieser Figur ist der Topf 1, der Topfdeckel 2, eine Kontaktstelle 3, eine Topfwand 4, eine Füllstandsmarkierung 5, eine lösbare Beschichtung 6 und ein Topfboden 7 dargestellt. Für den Topf 1 wird zur Systemertüchtigung zum Infrarotsensorgaren eine Beschichtung mit Folie, Lack oder anderen Mitteln herbeigeführt. Diese Beschichtung 6 ist so aufzubringen, daß sie für Normalkochen restlos lösbar ist. Wird diese Schicht 6 durch ein an der Topfwand lösbar befestigtes Band gebildet, so kann dieses Band an der Topfwand 4 durch eigene mechanische Spannung und/oder thermisches Aufschrumpfen selbsttätig haften. Dieses Band kann, wenn der Topf dem Sensorgaren nicht mehr unterzogen ist, gelöst werden und für andere Normaltöpfe, die sensortauglich sein sollen, erneut verwendet werden. In ebensolcher Weise wird verfahren, wenn die Beschichtung des Topfes 1 durch einen am Umfang des Topfes feststellbaren infrarottauglichen Bügel erfolgt. Vorstellbar ist weiterhin, daß zur Beschichtung des Topfes eine umfangsverstellbare, hitzebeständige Folie aufgebracht wird. Wichtig ist es, daß die aufgebrachten Beschichtungen einen normierten Emissionsfaktor besitzen. Dieser Emissionsfaktor hat im Wellenlängenbereich der Infrarotstrahlung ab 8 um bis 14 um nahezu den Wert 1, sodaß Gargerät und sensorgesteuerte Garungseinheit optimiert sind. Der Meßfleck für den Infrarotsensor muß mindestens 35 mm über der Glaskeramik und nicht im Bereich des Überganges von Topfboden zur Topfwand befindlich sein. Dies liegt darin begründet, daß ein Topf bei einer Erwärmung beispielsweise auf Induktionsmulden im Topfbodenbereich stark erwärmt werden kann. Da durch einen zu hohen Meßfleck die Mindestfüllmenge des Topfes ansteigt, ergibt sich der oben genannte Kompromiß. Ein Meßfleck kann dabei mit einem minimalen Durchmesser von ca 10 bis 15 mm realisiert werden. Für eine optimierte Lage der Infrarotabstrahlfläche ergibt sich dabei auf der Topfwand ein Bereich von ca. 35 bis 50 mm über der Kochfläche. In diesem Bereich ist daher die nachträgliche Beschichtung des Normaltopfes aufzubringen. Die Nachrüstung eines Kochtopfes zum Sensorkochtopf hat den Vorteil, daß das Sensorkochen mit dieser Hilfe einigermaßen sicheres temperaturkonstantes Garen ermöglicht, wobei die Schicht bestimmenden Mittel wie aufgebrachte Folien, Bänder und infrarottaugliche Bügel durch ihre restlose Lösbarkeit den Topf nicht bleibend verändern, und dabei einen teueren Systemtopf vorübergehend ersetzen können.

## Patentansprüche

1. Topf für eine sensorgesteuerte Garungseinheit, die aus Gargerät, Sensorik und Kochfeld besteht, wobei ein der sensorgesteuerten Garungseinheit zugeordneter Infrarotsensor kochstellenbezogen leicht erhöht oberhalb des Kochfeldes angeordnet und in einer konstruktiven Funktionseinheit integriert ist, so daß in der sensorgesteuerten Garungseinheit Kochfeld, Gargerät und Sensorik systemhaft miteinander verbunden, aufeinander angepaßt und optimierbar sind, **dadurch gekennzeichnet**, daß eine Systemertüchtigung zum Infrarotsensorgaren für Normaltöpfe durch eine Beschichtung (6) mit Folie, Lack oder anderen Mitteln herbeigeführt ist, wobei diese Beschichtung (6) eine restlos lösbare ist.

2. Topf für eine sensorgesteuerte Garungseinheit nach Anspruch 1, **dadurch gekennzeichnet**, daß die Beschichtung (6) des Topfes (1) durch ein an der Topfwand (4) lösbar befestigtes Band erfolgt.

3. Topf für eine sensorgesteuerte Garungseinheit nach Anspruch 1, **dadurch gekennzeichnet**, daß die Beschichtung (6) des Topfes (1) durch entfernbare Lackierungen erfolgt.

4. Topf für eine sensorgesteuerte Garungseinheit nach Anspruch 1, **dadurch gekennzeichnet**, daß die Beschichtung (6) des Topfes (1) durch einen am Umfang des Topfes (1) feststellbaren infrarottauglichen Bügel erfolgt.

5. Topf für eine sensorgesteuerte Garungseinheit nach Anspruch 1, **dadurch gekennzeichnet**, daß die Beschichtung (6) des Topfes (1) durch eine umfangsverstellbare hitzebeständige Folie erfolgt.

6. Topf für eine sensorgesteuerte Garungseinheit nach Anspruch 1, **dadurch gekennzeichnet**, daß die lösbare Beschichtung (6) eine umlaufende Breite von ca. 20 mm besitzt und zwischen 20 bis 25 mm Höhe vom Topfboden (7) her angesetzt ist.

7. Verfahren zur Systemertüchtigung zum Infrarotsensorgaren eines Normaltopfes, **dadurch gekennzeichnet**, daß eine Beschichtung (6) mit Folie, Lack oder anderen Mitteln an der Außenwand des Topfes (1) herbeigeführt wird, wobei diese Beschichtung restlos entfernbar aufgebracht wird.

## Claims

1. Pot for a sensor-controlled cooking unit, which consists of cooking apparatus, sensor system and cooking field, wherein an infrared sensor associated with the sensor-controlled cooking unit is arranged slightly raised above the cooking field with respect to cooking position and is integrated in a constructional functional unit, so that cooking field, cooking apparatus and sensor system are interconnected in terms of system, matched to one another and able to be optimised in the sensor-controlled cooking unit, characterised in that a system capability for infrared sensor cooking is provided for normal pots by a covering (6) with foil, lacquer or other means, wherein this covering is one which is completely detachable.

2. Pot for a sensor-controlled cooking unit according to claim 1, characterised in that the covering (6) of the pot (1) is effected by a strip detachably fastened to the pot wall (4).

3. Pot for a sensor-controlled cooking unit according to claim 1, characterised in that the covering (6) of the pot (1) is effected by removable lacquerings.

4. Pot for a sensor-controlled cooking unit according to claim 1, characterised in that the covering (6) of the pot (1) is effected by a bracket, which is infrared capable, fixable at the circumference of the pot (1).

5. Pot for a sensor-controlled cooking unit according to claim 1, characterised in that the covering (6) of the pot (1) is effected by a heat-resistant foil adjustable at the circumference.

6. Pot for a sensor-controlled cooking unit according to claim 1, characterised in that the detachable covering (6) has an encircling width of about 20 millimetres and is placed on at between 20 to 25 millimetres height from the pot base (7).

7. Method for system capability for infrared sensor elements of a normal pot, characterised in that a covering (6) by foil, lacquer or other means is provided at the outer wall of the pot (1), wherein this covering is applied so as to be completely removable.

## Revendications

1. Récipient pour une unité de cuisson contrôlée par capteur, composée d'un appareil de cuisson, d'un système à capteur et d'une plaque de cuisson, dans lequel un capteur infrarouge attribué à l'unité de cuisson contrôlée par capteur est disposé légèrement au-dessus de la plaque de cuisson par rapport au poste de cuisson et intégré en une unité fonctionnelle constructive de manière à ce que, dans l'unité de cuisson contrôlée par capteur, la plaque de cuisson, l'unité de cuisson et le système à capteur soient systémiquement reliés entre eux, adaptés l'un à l'autre et optimisables, caractérisé en ce qu'une appropriation systémique de récipients normaux est réalisée pour cuisson à capteur infrarouge par un recouvrement (6) de film, de vernis au d'autres moyens, dans laquelle ce recouvrement (6) est entièrement détachable.

2. Récipient pour une unité de cuisson contrôlée par capteur selon la revendication 1, caractérisé en ce que le recouvrement (6) du récipient (1) est réalisé par un bandage fixé de manière amovible à la paroi de récipient (4).

3. Récipient pour une unité de cuisson contrôlée par capteur selon la revendication 1, caractérisé en ce que le recouvrement (6) du récipient (1) est réalisé par des vernissages détachables.

4. Récipient pour une unité de cuisson contrôlée par capteur selon la revendication 1, caractérisé en ce que le recouvrement (6) du récipient (1) se fait par un étrier convenant pour l'infrarouge fixable au périmètre du récipient (1).

5. Récipient pour une unité de cuisson contrôlée par capteur selon la revendication 1, caractérisé en ce que le recouvrement (6) du récipient (1) est réalisé par un film résistant à la chaleur, de circonférence réglable.

6. Récipient pour une unite de cuisson contrôlée par capteur selon la revendication 1, caractérisé en ce que le recouvrement amovible (6) présente une largeur périphérique d'environ 20mm et est montée à une distance de 20 à 25 mm à partir du fond de récipient (7).

7. Procédé pour l'appropriation systémique d'un récipient normal pour cuisson à capteur infrarouge, caractérisé en ce qu'un recouvrement (6) de film, de vernis ou d'autres moyens est réalisé à la paroi extérieure du récipient (1), dans lequel ce recouvrement est appliqué de manière entièrement amovible.
